Europäisches Patentamt

European Patent Office

Office européen des brevets

(11) Publication number: **0 366 272**
**A1**

# EUROPEAN PATENT APPLICATION

(21) Application number: 89309868.1

(22) Date of filing: 28.09.89

(51) Int. Cl.⁵: **B60H 1/00** , **B60P 3/20**

(30) Priority: 28.09.88 GB 8822767

(43) Date of publication of application:
02.05.90 Bulletin 90/18

(84) Designated Contracting States:
BE DE ES FR GB IT NL

(71) Applicant: YORK TRAILER COMPANY LIMITED
Yafforth Road
Northallerton North Yorkshire, DL7 8UE(GB)

(72) Inventor: Endelin, Claude
42 Ter, Route de Macon
F-71450 Blanzy(FR)

(74) Representative: Allen, Oliver John Richard et
al
Lloyd Wise, Tregear & Co. Norman House
105-109 Strand
London, WC2R 0AE(GB)

(54) Improvements in and relating to temperature contol of refrigerated vehicles.

(57) An apparatus for controlling the temperature of one or more enclosed spaces is described. It comprises a heater (42), a heat exchanger (32), an air path which connects a suction passage (14) and a discharge passage (16) and contains an air circulation means (34). The suction and discharge passages (14, 16) are connected to each enclosed space by vents, which are selectively operable in response to the temperature in the space to allow passage of air therethrough. The system can operate in two modes, one, when cool air is required, in which the air path includes the heat exchanger alone and a second, when a change to hot air is required, where it includes the heater. In the second mode, in one embodiment, the air path passes over the heater alone so that hot air is immediately available, while, in a second embodiment, the air passes over both the heater and heat exchanger so that hot air passes through the heat exchanger to raise its temperature. The advantage of the arrangement is that the apparatus can be rapidly switched from cooling to heating allowing efficient and accurate temperature control.

Fig.5.

This invention relates to refrigerated vehicles such as lorries, vans, trailers and semi-trailers and refrigerated containers used for carrying fresh, chilled or frozen foodstuffs, or other goods whose temperature must be controlled and in particular to the temperature control of the load space of such vehicles and containers. The invention especially relates to the temperature control of the compartments of mult-compartmental vehicles or containers, that is, vehicles or containers whose load space is divided into two or more compartments.

In known refrigerated vehicles, a refrigeration unit is employed to maintain the temperature at that required for the goods being carried. The refrigeration unit normally extracts heat, in order to cool the temperature of the air so that, for example, frozen foodstuffs may be carried. However, it is common for the refrigeration unit also to be arranged so that it is also capable of heating the air when a high compartment temperature is desired, for example, in cold weather when damage to fresh cargo could occur.

In one known temperature control arrangement for multi-compartmental vehicles, the refrigeration unit has been located in the compartment which is to be kept at the lowest temperature. The compartments are all interconnected by air ducts, which may be located in the movable bulkheads which form the compartments or in the walls of the compartments, in which are positioned fans. When another compartment is to be cooled, the air ducts between the compartment containing the refrigeration unit and the compartment to the cooled and any intermediate compartments are opened and the fans operated to cause cold air to be transferred to the second compartment. Temperature probes in each of the compartments control the opening of the ducts and operation of the fans.

This arrangement has the disadvantage that individual temperature control of each of the compartments is not possible, only the compartment containing the refrigeration unit being able to be either heated or cooled. For example, if the compartment is being cooled then tbe other compartments can also only be cooled.

In order to overcome this problem it has been suggested to provide an auxiliary chamber at the front of the vehicle or container between a 'false' bulkhead and the front bulkhead and to locate the heat exchanger and fan in the auxiliary chamber. Two plenum chambers are provided, each of which has shuttered openings connecting it to each of the compartments. One plenum chamber serves to carry air from the heat exchanger and the other serves to return it thereto. By opening the appropriate set of shutters, the temperature of a particular compartment can be controlled. With a laterally divided container, the plenum chambers extend the length of the container whilst with a longitudinally divided container they extend across the width. The arrangement allows independant temperature control of all the compartments.

However, with both a single compartment vehicle and the multi-compartment arrangements described above, a problem arises when it is desired to switch from cooling to heating. The problem is that it is not possible to rapidly change from one to the other since the heat exchanger takes a certain amount of time to reach the correct temperature. This introduces a time delay in the operation which reduces the efficiency of the system at maintaining the compartment or compartments at the desired temperature(s).

In accordance with the invention an apparatus for controlling the temperature of at least one enclosed space comprises a heater, a heat exchanger, an air flow path which connects a suction passage and a discharge passage and contains at least one air circulation means, the suction and discharge passages being connected to the space(s) by selectively operable vents, and means for controlling the operation of the vents in response to the temperature in the space(s), the system being capable of selective operation in one of two modes, a first mode in which the air flow path includes the heat exchanger alone and a second mode in which the air flow path includes the heater.

The provision of a separate heater and an arrangement where the air flow path can include the heater means that switching from cooling to heating of an enclosed space can be achieved substantially more quickly than in known temperature control installations. The arrangement further permits individual temperature control of a plurality of spaces and the speed of switching from cooling to heating is particularly advantageous when a number of spaces are to have their temperature controlled, since one space can be cooled and, without any significant time delay, another space can be heated.

In a first preferred embodiment, means are provided whereby the air flow path can be arranged to either pass through the heat exchanger alone or to bypass the heat exchanger and pass through the heater. This embodiment allows practically instantaneous switching from cooling to heating, and vice-versa. Further the heat exchanger need only be capable of cooling air.

In a second preferred embodiment, the heat exchanger has to be capable of both heating and cooling air, and means are provided whereby the air flow path can be arranged to either pass through the heat exchanger alone or to pass through both the heat exchanger and the heater. With this embodiment, when the temperature of a space needs to be raised, the heat exchanger is switched from cooling to heating, the heater is activated, and the air flow path is arranged to go through both the heat exchanger and the heater. The hot air from the heater serves to very rapidly bring the heat exchanger to the correct operating temperature, at which point the vents to the space where heating is required are opened. The advantage of this arrangement is that only a relatively small heater is required since the combined effect of the heat from the exchanger itself and the hot air circulating across is that the switch from cooling to heating, whilst not instantaneous, is very quick.

Suitably the arrangement is such that air can pass from the suction passage to both the heater and the heat exchanger both of which have air circulation means, preferably in the form of a fan, associated therewith. The discharge plenum is arranged to receive air both from the heater and the heat exchanger, passage of air through both of which occurs when the associated air circulation means is activated.

In the first preferred embodiment, a flap is provided which is movable between two positions, a first position which allows air to pass over the heat exchanger and a second position where passage of air to the heat exchanger is prevented.

In the second preferred embodiment, air from the heater passes to the discharge passage via the heat exchanger via a duct connecting the heater casing and the heat exchanger.

The apparatus is very suitably employed in the temperature control of the body of a refrigerated vehicle or container, in particular one which is divided into several compartments. Preferably the body includes a false bulkhead which in use co-operates with the front bulkhead to form a chamber with which the suction and discharge passages communicate. Suitably the heater is externally mounted and is enclosed in a casing, the heater casing being connected to the suction passage and to the chamber.

Conveniently a thermostat is provided in each compartment which senses the temperature therein, the thermostat(s) being connected to a control means which is operable to activate the air circulation means and/or the vents and/or the heater and/or the heat exchanger and, in the first embodiment, to move the flap from the first position to the second position and vice-versa.

Suitably the vehicle body is divided laterally into three compartments and comprises a longitudinally extending chamber above the compartments, the chamber being internally divided to form the suction passage and the discharge passage. By providing both the suction passage and the discharge passage in a chamber above the compartments rather than providing the discharge passage above the compartments and the suction passage below the compartments, as is the case in some suggested arrangements, space is saved and there is no intrusion of the passages into the load-carrying spaces making them irregular in cross-section and reducing their load carrying capacity. Moreover, the air is directed downwards from the discharge passage and sucked upwards into the suction passage which means that there is good mixing of the air in the compartment whose temperature is being controlled and the temperature change in the compartment is accelerated.

Advantageously, the false bulkhead is pivotedly connected at its upper edge to the ceiling of the body so that it can be moved into a position closely adjacent and substantially parallel to the ceiling. The heat exchanger is mounted to the front bulkhead on the opposite side from the false bulkhead and air passes to the exchanger from the discharge passage via the chamber between the bulkheads and then through an opening in the front bulkhead. When a vehicle or container which has bulkheads which can be moved into position to divide it into compartments is to be used without division, the false bulkhead can be swung away and air returned to the heat exchanger via the opening in the front bulkhead rather than the suction passage. The advantage of this is that the available load space is increased. When compartments are required the false bulkhead must be swung back to a position separating the forwardmost compartment from the opening and the heat exchanger.

The invention will now be further described by way of example with reference to the accompanying drawings in which:

Figure 1 is an oblique sketch of part of a refrigerated vehicle incorporating apparatus in accordance with the invention;

Figure 2 is a simplified side view of the apparatus of Figure 1:

Figure 3 is a similar view to Figure 2 but showing the vehicle undivided;

Figure 4 is a section through a flap preferably employed with the apparatus of Figure 1;

Figure 5 is a side view of a first embodiment of apparatus in accordance with the invention;

Figure 6 is a similar view to Figure 5 but showing a different mode of operation;

Figure 7 is a side view of a second embodiment of apparatus in accordance with the invention and

Figure 8 is a similar view to Figure 7 but showing a different mode of operation.

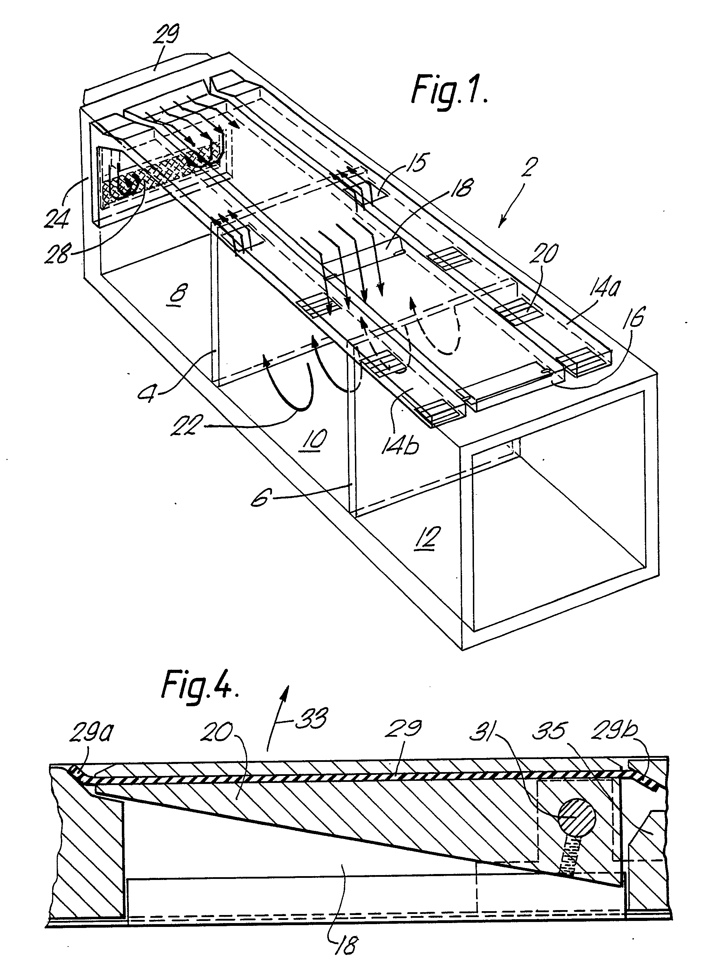

The body of the vehicle 2 shown in Figures 1 to 3 is divided by bulkheads 4, 6 into three compartments 8, 10 and 12. The roof of the vehicle contains three ducts, two of which, 14a 14b, act as suction passages, that is, air moves out of the compartments 8, 10 and 12 via openings 15 into them, and one of which, 16, acts as a discharge passage, air moving from it via openings 18, into the compartments 8, 10 and 12. Passage of air through the openings 15, 18 is controlled by selectively operable flaps 20.

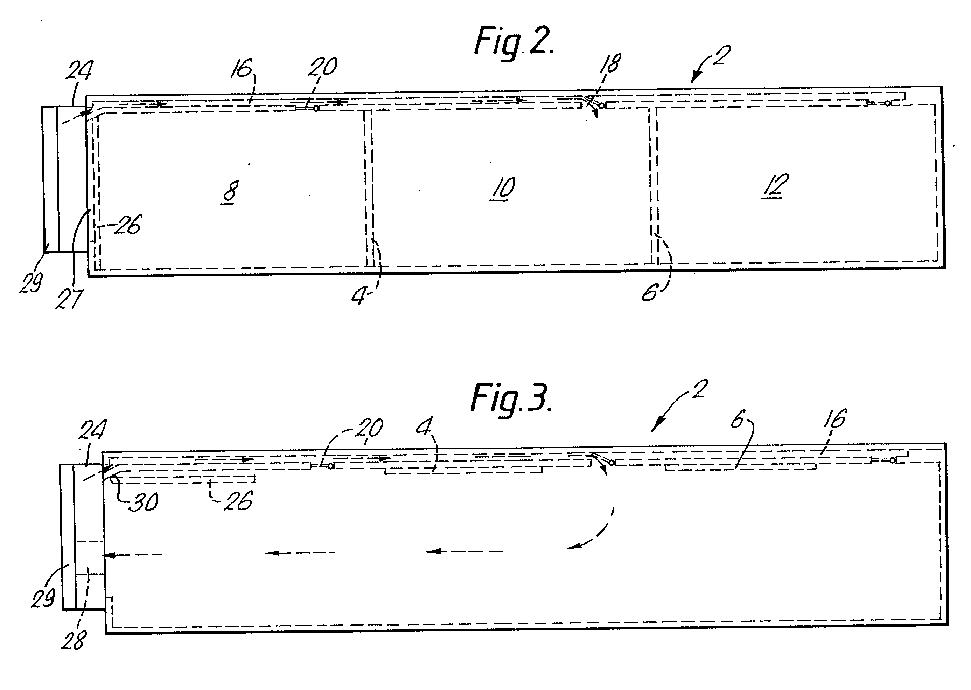

As illustrated in Figures 1 and 2, when the temperature of a compartment is to be varied, in this instance the middle compartment 4, the flaps 20 covering the openings 15, 18 between the suction and discharge passages 14, 16 and the compartment 4 are opened and air passes along the discharge passage 16, down into the compartment 4. Air passes through the compartment 4 (see arrows 22) and into the suction passages 14a and 14b. By having both the suction and discharge passages 14, 16 in the roof of the vehicle 2, good circulation of air is achieved as the arrows 22 illustrate.

Air discharges from the suction passages 14a and 14b between one side of the front bulkhead 24 and a false bulkhead 26 (omitted from Figure 1 for clarity) which is located at a distance from the front bulkhead 24 so as to form a chamber 27 between the two. The air passes through a grilled opening 28 in the front bulkhead 24 to a heat exchanger mounted on the opposite side of the front bulkhead 24 and enclosed by a casing 29, as will be described in greater detail below.

The false bulkhead 26 is preferably hinged, see 30, to the ceiling of the vehicle 2. The advantage of this is that when the vehicle 2 is to be used with no divisions, as shown in Figure 3, the bulkhead 26 can be swung away and load space is thereby increased. The air then, instead of leaving the single compartment via the suction passages 14, is simply sucked straight into the grilled opening 28, through the bottom of chamber 27 which is in effect a suction passage, and thence to the heat exchanger. The only duct which is operational is the discharge passage 16, and the flaps 20 over the openings 18 between this and the single compartment are operated sequentially to ensure an even temperature distribution along the length of the compartment.

It is important for efficient and effective temperature control that the flaps 20, when closed, not only seal well, that is, prevent passage of any air into the appropriate compartment, but also do not tend to open due to suction of air passing above them. The reason for this is that, if the flaps do not seal well, air of a temperature suitable for one compartment will also enter another which could adversely affect the second's temperature. This will also happen if the flaps do not stay closed when required and, further, if the flaps open, air from one compartment may pass to another instead of across the heat exchanger which will lead to the compartments tending to reach the same temperature and make individual temperature control impossible. In known arrangements either gravity flaps were employed, which close under the action of gravity and are opened by air pressure acting on them, or electronically controlled shutter flaps were used. Both types did not provide adequate sealing, gravity flaps are not suitable when independant compartment temperature control is to be achieved and shutter flaps have a tendancy to spring open when air passes over them.

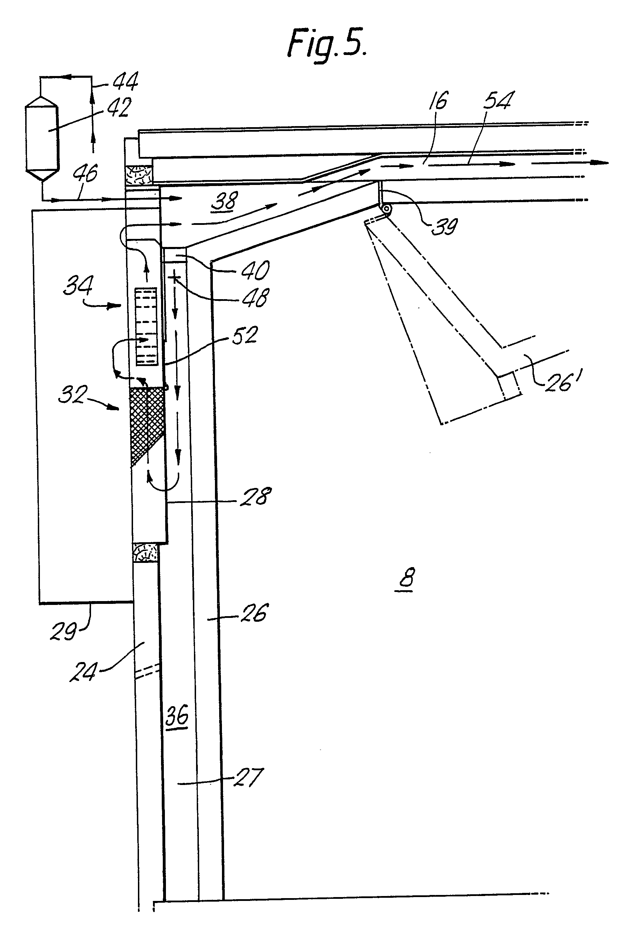

A preferred form of flap 20 is shown in Figure 4 covering an opening 18 between the discharge passage 16 and a compartment. This is generally wedge-shaped, the thin end facing the direction of incoming air from the heat exchanger. The flap 20 has a flexible sheet 29 secured therein such that its two ends 29a, 29b are free. The ends 29a, 29b in the closed position, as shown, abut against the specially shaped edges of the opening 18 in the roof which connecta the discharge passage 16 to the compartment and this not only seals the opening 18, but holds the flap 20 down. When the flap 20 is to open, a rod 31 which passes through and is secured to its thick end is caused to rotate by means which are not shown. The rod 31 preferably also causes movement of the other flaps associated with the compartment which cover the openings 18 between the compartment and the suction passages 14, all the flaps connecting the passages 14, 16 and a particular compartment suitably being aligned.

The flap 20 rotates in the direction of arrow 33 which causes the end 29a of the sheet 29 to move into abutment with the roof of the passage 16 and the other end 29b to move into abutment with another portion 35 of the edge of the opening 18. The flap 20 then blocks movement of air further along the passage 16 and thereby ensures maximum heating/cooling effect.

Preferably all the flaps are identical to that described above and all the openings 15, 18 between the suction passages 14 and discharge passage 16 and the compartments are formed with their edges as shown in Figure 4.

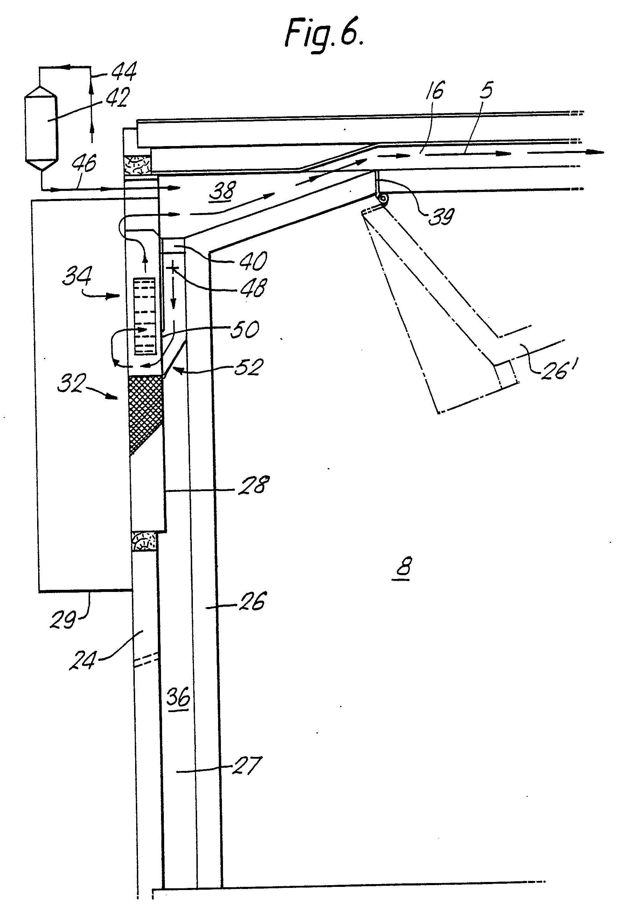

Figures 5 and 6 show one embodiment of an apparatus for controlling the temperature of the vehicle 2 described above. The apparatus comprises a heat exchanger 32 mounted in the front bulkhead 26 and a fan 34, the heat exchanger 32 and fan 34 being covered by the casing 29. The chamber 27 provided between the front and false bulkhead 24, 26 is divided into a lower portion 36 and an upper portion 38, which is broader due to the angling of the false bulkhead 26, by a divider 40, secured to the front bulkhead 24. The top end of the angled portion of the false bulkhead is hinged, see 39, to the roof of the vehicle so that it can be swung into the position shown at 26' for maintenance of the apparatus. The apparatus further comprises a heater 42 which has an associated fan, not shown. The heater 42 is also enclosed by a casing which is in air communication with the suction passages 14a and 14b via duct 44 and with the discharge passage 16 by duct 46, via the upper section 38 of the chamber 27.

The apparatus is shown in Figure 5 in the cooling mode, that is, cool air is being circulated through a compartment. The fan 34 associated with the heat exchanger 32 is activated, the heat exchanger 32 is operating in the cooling mode and the fan associated with the heater 42 is off. Air from the compartment is sucked through the suction passages 14a and 14b by the fan 34 and enters the lower portion 36 of the chamber 27 between the front and false bulkheads 24, 26 (see 48). Little if no air moves through the heater since the associated fan is not operating. An opening 50 between the chamber 27 and the fan 34 is covered by a flap 52 and the air therefore moves down the lower portion 36 of chamber 27, through grilled opening 28 and over the heat exchanger 32 where it is cooled. The fan 34 returns the air to the compartment via the upper portion 38 of the chamber 27 and the discharge passage 16. The movement of the air is shown by arrows 54.

To convert the apparatus to the heating mode, as shown in Figure 6, the heater 42 is activated as is its fan and the flap 52 is moved into a position where it blocks passage of air down the lower portion 36 of the chamber 27 to the heat exchanger 32 and uncovers the opening 50.

With this arrangement, air from the suction passages is drawn not only into the lower chamber portion 36, from whence it passes through opening 50 and back to upper chamber portion 38 under the action of fan 34, but also across heater 42, where it is heated, via ducts 44 and thence back to upper chamber portion 38, via duct 46. The mixture of air is returned to the compartment through discharge passage 16.

Thus the supply of air to discharge passage 16 can be almost instantaneously changed from cool air to warm air which means the temperature of the compartments can be very accurately controlled since there is no delay involved when warm air needs to be supplied.

The heat exchanger 32 can be deactivated during heating or it can continue operating ready for an immediate switch back to cooling. The heat exchanger therefore need not be capable of both heating and cooling and this can save expense. However if a heat exchanger which can also heat air is employed, then when heating is required it can be turned to heating and, once it has warmed up, the flap 52 can be moved so that hot air is supplied to the compartments from both the heater 42 and the heat exchanger 32 which will allow the compartment temperature to be raised very rapidly.

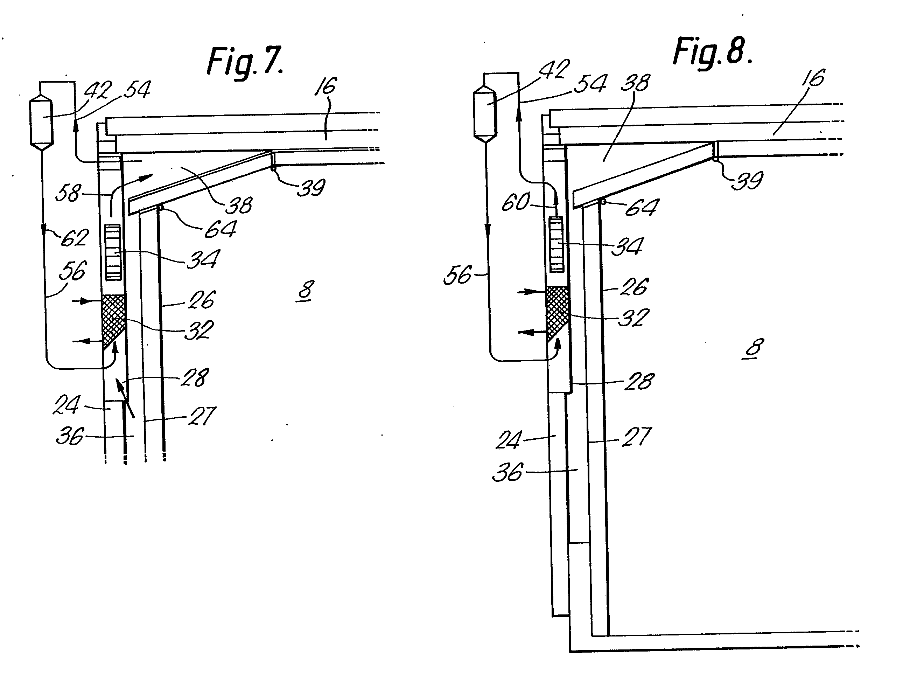

A second emodiment of the temperature control apparatus is shown in Figures 7 and 8. This is similar structurally to the first embodiment shown in Figures 5 and 6 so like parts have been given the same reference numerals and only the differences will be described. In this embodiment, no flap or divider is provided in chamber 27. Instead the suction passages 14a and 14b discharge adjacent the grilled opening 28. The inlet duct 54 to the heater 42 is from the upper end of chamber 27 while the outlet duct 56 leads to the heat exchanger 32.

In the cooling mode, the arrangement is very similar to the first embodiment in that the heater 42 and associated fan are not activated whilst the heat exchanger 32 is operating to cool air and the associated fan 34 is on. Air flows from the suction passages 14a and 14b to the heat exchanger 32 where it is cooled and is then returned by fan 34 through the upper part of chamber 27 to the discharge passage 16. (see arrows 58 in Figure 7). No air moves along ducts 54 and 56 since the heater fan is off.

To change from cooling to heating, all the openings between the suction and discharge passages 14, 16 are closed by the flaps, the heater 42 and associated fan are activated and the heat exchanger 32 is turned over to heating mode.

With this arrangement, as illustrated in Figure 8, air is circulated by the two fans across the heater 42 and the heat exchanger 32 via the chamber upper 38, duct 54 and duct 56 (see arrows 60).

The effect of the hot air on the heat exchanger is to accelerate greatly its transfer from cooling to heating so that it rapidly reaches the required operating temperature. The flaps between the appropriate compartment and the suction and discharge passages are opened and air from the compartment is again circulated across the heat exchanger, see arrows 58 in Figure 7. The fan associated with the heater 42 is still operational so that some air is withdrawn from the upper chamber and passed across the heater 42 and heat exchanger 32 (see arrows 62).

The advantage of this embodiment is that firstly it is structurally simple and therefore inexpensive to produce. Only a low power heater is required to make a significant change to the rate of conversion of the heat exchanger from cooling to heating. Thus almost continuous temperature control of the compartments can be achieved.

The false bulkhead 26 in Figures 7 and 8 has an angled upper end as in Figures 5 and 6 but the vertical portion of the bulkhead 26 is hinged to the angled portion 54 and the upper end is hinged to the roof of the vehicle 39. The hinge 64 acts in the same way as the hinge 30 in the arrangement of Figures 2 and 3 where the roof rather than the bulkhead is angled, that is, it allows the false bulkhead 26 to be swung up against the roof when a single load space is required. The hinge 39 allows inspection and maintenance of the upper portions of the apparatus.

In both embodiments, the activation of the heat exchanger 32 and its associated fan 34, the heater 42 and the associated fan and the operation of the flaps 20 is controlled by a central control unit. The unit also controls the position of the flap 52 within the chamber 27 in the embodiment of Figures 5 and 6. The control unit operates in response to signals from temperature probes (not shown) in each enclosed space whose temperature is to be controlled. The control unit is set with the desired temperature for each space when the vehicle or container is loaded and gives the appropriate instructions, depending on the difference between the sensed and desired temperatures.

Both embodiments of the temperature control apparatus can be employed with either multi- compartmental or single compartment vehicles or containers or indeed any enclosed space or spaces. The multi-compartmental vehicle described herein is one which is divided laterally but the temperature control apparatus can be equally successfully employed with longitudinally divided vehicles, the only real difference being that the air passages extend widthwise across the vehicle instead of lengthwise.

The apparatus of the invention provides a relatively simple and very efficient way of controlling the temperature of one or more enclosed spaces and in particular of a multi-compartment vehicle or container.

## Claims

1. An apparatus for controlling the temperature of at least one enclosed space comprising a heater, a heat exchanger, an air flow path which connects a suction passage and a discharge passage and contains at least one air circulation means, the suction and discharge passages being connected to the space(s) by selectively operable vents and means for controlling the operation of the vents in response to the temperature in the space(s), the system being capable of selective operation in one of two modes, a first mode in which the air flow path includes the heat exchanger alone and a second mode in which the air flow path includes the heater.

2. An apparatus as claimed in Claim 1 wherein means are provided whereby in the second mode of operation, the air flow path bypasses the heat exchanger.

3. An apparatus as claimed in Claim 1 wherein in the second mode of operation the air flow path includes both the heater and the heat exchanger.

4. Apparatus as claimed in any preceding Claim wherein a first air path is provided which leads from the suction passage to the heat exchanger and air circulation means associated therewith, and a second air path is provided which leads from the suction passage to the heater.and air circulation means associated therewith, both paths leading back to the discharge passage.

5. Apparatus as claimed in Claim 4 when dependant on Claim 2 wherein a flap is provided in the first air path which in one position allows air to pass across both the heat exchanger and the associated air circulation means and in a second position allows air to pass across the air circulation means alone.

6. Apparatus as claimed in Claim 4 when dependant on Claim 3 wherein the second air path also contains the heat exchanger.

7. Apparatus as claimed in any preceding Claim wherein the enclosed space(s) comprise the load carrying compartment(s) of a refrigerated vehicle or container.

8. Apparatus as claimed in Claim 7 wherein the vehicle or container has a false bulkhead which can be positioned adjacent the front bulkhead of the vehicle or container to define a chamber therebetween which is in communication with both the suction and discharge passages.

9. Apparatus as claimed in Claim 8 wherein the false bulkhead is hinged to the roof of the vehicle or container in such a way that it can be positioned against and generally parallel to the roof.

10. Apparatus as claimed in either Claim 8 or 9 wherein the heat exchanger is mounted on the front bulkhead, passage of air from the chamber to the heat exchanger being via an aperture in the front bulkhead.

11. Apparatus as claimed in any preceding Claim wherein a temperature sensing means is provided in each space, the sensing means being connected to control means which is operable to activate the air circulation means and/or the vents and/or the heater and/or the heat exchanger.

29

Fig.1.

15

18

2

24

28

20

14a

8

16

4

22

10

14b

6

12

Fig.4.

29a    20    33    29    31    35    29b

18

EP 0 366 272 A1

## Fig.2.

24    16    20    18    2

26

8    10    12

29    4    6

27

## Fig.3.

24    20    4    2    6    16

30    26

29

28

# Fig.5.

## Fig.6.

*Fig. 7.*

*Fig. 8.*

EP 0 366 272 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | WO-A-8 802 705  (PETTER REFRIGERATION) * Page 12, line 13 - page 14, line 13; figures 5,6 * | 1,3,7,8 ,10 | B 60 H    1/00 B 60 P    3/20 |
| A | | 11 | |
| Y | US-A-2 318 858  (J. HORNADAY) * Page 2, column 1, lines 49-73; figures 1,2 * | 1,3,7,8 ,10 | |
| A | US-A-4 462 461  (H. GRANT) * Column 3, line 36 - column 4, line 2; figures 1-4 * | 1,2,4,5 ,7,8,10 | |
| A | US-A-4 726 196  (A. ZAJIC) * Entire document * | 1,7,8, 10 | |
| A | US-A-4 553 584  (D. BLOOMQUIST) * Abstract; figures 1-5 * | 1,7 | |

TECHNICAL FIELDS
SEARCHED (Int. Cl.5)

B 60 H
B 60 P
F 25 D
F 25 B

The present search report has been drawn up for all claims

| Place of search | Date of completion of the search | Examiner |
|---|---|---|
| THE HAGUE | 26-01-1990 | CZAJKOWSKI A.R. |